(19) Europäisches Patentamt / European Patent Office / Office européen des brevets

(11) **EP 3 401 791 A1**

(12) **EUROPEAN PATENT APPLICATION**

(43) Date of publication:
**14.11.2018 Bulletin 2018/46**

(51) Int Cl.:
***G06F 11/34*** *(2006.01)*  ***G06F 11/07*** *(2006.01)*
***G06F 17/40*** *(2006.01)*

(21) Application number: **18171457.7**

(22) Date of filing: **09.05.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **12.05.2017 JP 2017095374** | (71) Applicant: **FUJITSU LIMITED**<br>**Kanagawa 211-8588 (JP)**<br><br>(72) Inventor: **Sato, Sawahiko**<br>**Kanagawa, 211-8588 (JP)**<br><br>(74) Representative: **Hoffmann Eitle**<br>**Patent- und Rechtsanwälte PartmbB**<br>**Arabellastraße 30**<br>**81925 München (DE)** |

(54) **LOG OUTPUT CONTROL APPARATUS, LOG OUTPUT CONTROL METHOD, AND DATABASE SERVER**

(57) A log output control apparatus includes a processor configured to, when a first log acquisition request is accepted from a terminal apparatus, perform a selection of a specific storage from a first storage and a second storage in accordance with log acquisition requests which has been accepted from the terminal apparatus before the first log acquisition request, the first storage being configured to store each of logs in response to accepting each of the logs, the second storage being configured to store a log stored in the first storage in response to an occurrence of an event, transmit the first acquisition request and identification information of the specific storage to the server apparatus, and respond a log to the terminal apparatus, the log being received from the server apparatus which obtained the log from the specific storage indicated by the identification information.

## FIG. 1

TERMINAL APPARATUS — 1

DISPLAY APPARATUS — 2

— 3

MANAGEMENT SERVER — 4

DATABASE SERVER — 5

EP 3 401 791 A1

**Description**

TECHNICAL FIELD

The present disclosure relates to a log output control technique and a database server.

BACKGROUND ART

It is known to use Database as a Service (DBaaS) in which a Hypertext Transfer Protocol (HTTP) request from a user is accepted, and DataBase (DB) instance Virtual Machine (VM) is assigned to the user.

In DBaaS, various kinds of operations on DB are executed in accordance with requests using HTTP. For example, a user terminal transmits an access request using HTTP to the DBaaS to access a log of the DB thereby acquiring log data.

Related techniques include a technique in which analysis is performed depending on a content of service classified by a message classification function that operates in cooperation with a mail server, and an analysis result is reflected on a Web page.

In another related technique, an integrated log management file is accessed according to an acquired log extraction condition, and formatted log data is extracted and a resultant extracted formatted log data is displayed on a screen.

In another related technique, for a data item to be recorded, a control value indicating whether data is to be stored, a control value indicating a data range to be stored, and a control value indicating a storage format are identified, and a storage method is determined based on the identified control values.

Related techniques are disclosed, for example, in Japanese Laid-open Patent Publication No. 2004-280423, Japanese Laid-open Patent Publication No. 2008-77611, and Japanese Laid-open Patent Publication No. 2010-140111.

SUMMARY

TECHNICAL PROBLEMS

In a case where the requested log has a large data size, instead of returning all log data at a time, the database server may output part of the log data to a terminal that is a requester of the log data.

For example, in a page-by-page display method in which log data is divided into a plurality of pages and the log data is displayed on a page-by-page basis, when a database server receives an HTTP request specifying a page number from a user terminal, the database server transmits log data of the specified page to the user terminal.

In the page-by-page display method, the present inventor has found that when a new log occurs after a user terminal acquires log data, if, after the occurrence of this log, the user terminal further acquires log data, then there is a possibility that a change has occurred in the content of the log included in each page. For example, after a user terminal acquires a particular page of log, if the user terminal issues an acquisition request for a page previous to the already-acquired page, then there is a possibility that the newly acquired page includes a log that has already been acquired. In this case, the user may again issue an acquisition request specifying another page number. That is, an occurrence of a new log during a log acquisition operation may cause an increase in an operation load in the log search.

In an aspect, the present disclosure provides a technique of reducing an operation load in log search.

SOLUTION TO PROBLEM

According to an aspect of the invention, A log output control apparatus includes a processor configured to, when a first log acquisition request is accepted from a terminal apparatus, perform a selection of a specific storage from a first storage and a second storage in accordance with log acquisition requests which has been accepted from the terminal apparatus before the first log acquisition request, the first storage being configured to store each of logs in response to accepting each of the logs, the second storage being configured to store a log stored in the first storage in response to an occurrence of an event, transmit the first acquisition request and identification information of the specific storage to the server apparatus, and respond a log to the terminal apparatus, the log being received from the server apparatus which obtained the log from the specific storage indicated by the identification information.

ADVANTAGEOUS EFFECTS OF INVENTION

According to an aspect, it is possible to reduce the operation load in the log search.

BRIEF DESCRIPTION OF DRAWINGS

FIG. 1 is a diagram illustrating an example of an overall configuration of a system according to an embodiment.
FIG. 2 is a diagram illustrating an outline of a process of acquiring a log.
FIG. 3 is a diagram illustrating an example of a manner of displaying logs for a case where page #1 is specified.
FIG. 4 is a diagram illustrating a first example of a manner of displaying logs for a case where page #2 is specified.
FIG. 5 is a diagram illustrating a second example of a manner of displaying logs for a case where page #2 is specified.
FIG. 6 is a diagram illustrating a first example of a manner of displaying logs for a case where a start position is specified.
FIG. 7 is a diagram illustrating a second example of a manner of displaying logs for a case where a start position is specified.
FIG. 8 is a diagram illustrating an example of a management server.
FIG. 9 is a diagram illustrating an example of history management information.
FIG. 10 is a diagram illustrating an example of a database server according to a first embodiment.
FIG. 11 is a flow chart illustrating an example of a flow of process performed by a management server.
FIG. 12 is a flow chart illustrating a flow of a process in step S102 in FIG. 11.
FIG. 13 is a flow chart illustrating a flow of a process performed by a database server according to the first embodiment.
FIG. 14 is a diagram illustrating an example of a database server according to a second embodiment.
FIG. 15 is a diagram illustrating an example of correspondence information.
FIG. 16 is a flow chart illustrating a flow of a process performed by a database server according to the second embodiment.
FIGs. 17A, 17B, and 17C are diagrams illustrating various pieces of information in a state before subjected to a process by a database server.
FIGs. 18A, 18B, and 18C are diagrams illustrating various pieces of information in a state after subjected to a process by a database server.
FIG. 19 is a diagram illustrating an example of a hardware configuration of a management server.
FIG. 20 is a diagram illustrating an example of a hardware configuration of a database server.

DESCRIPTION OF EMBODIMENTS

<Example of overall configuration of system according to embodiment

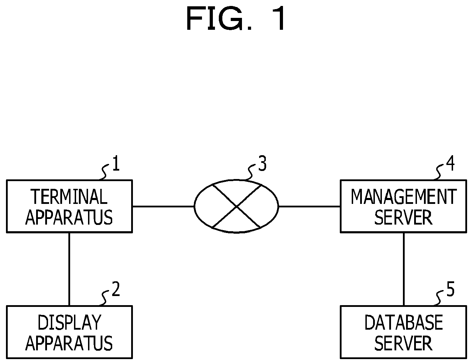

Referring to drawings, embodiments are described below. FIG. 1 illustrates an example of an overall configuration of a system according to an embodiment. The system according to the embodiment includes a terminal apparatus 1, a display apparatus 2, a network 3, a management server 4, and a database server 5.

The terminal apparatus 1 transmits various requests to the management server 4. Examples of the various requests include HTTP requests for access to a DB, acquisition of log data, or the like. The terminal apparatus 1 is an example of a computer and a control apparatus.

The display apparatus 2 displays information received from the terminal apparatus 1. For example, the display apparatus 2 receives log data associated with a DB from the terminal apparatus 1 and displays a content of the log (the content of the log data) on a screen. The display apparatus 2 displays the content of the log, for example, on a page-by-page basis. For example, the terminal apparatus 1 and the display apparatus 2 may be integrated in a single apparatus as with a notebook-type personal computer or a tablet terminal.

The network 3 is, for example, the Internet. Alternatively, for example, the network 3 may be a Local Area Network (LAN).

The management server 4 manages the database server 5. For example, the management server 4 acquires log data from the database server 5 based on a received request. The management server 4 is an example of a log output control apparatus.

The database server 5 stores a DB, log data associated with the DB, and the like. The database server 5 is applied, for example, DBaaS.

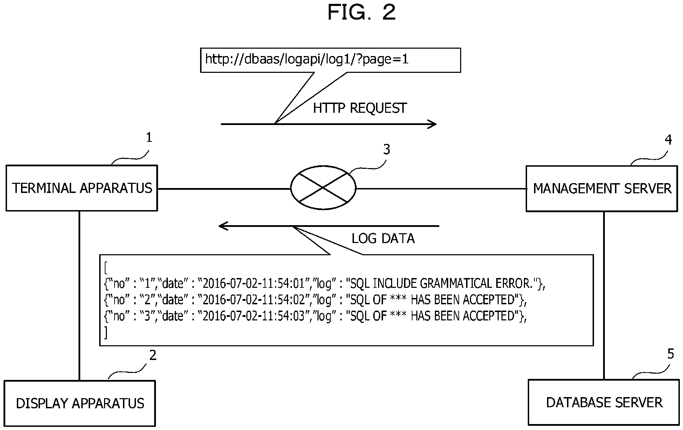

FIG. 2 is a diagram illustrating an outline of a log acquisition process. The terminal apparatus 1 transmits an HTTP log acquisition request to the management server 4 as illustrated by way of example in FIG. 2. The management server 4 acquires log data specified by the HTTP request from the database server 5, and transmits the acquired log data to the terminal apparatus 1. The terminal apparatus 1 displays a content of the log on the display apparatus 2 based on the received log data. A manner of displaying the log will be described in detail below.

<Examples of manners of displaying logs>

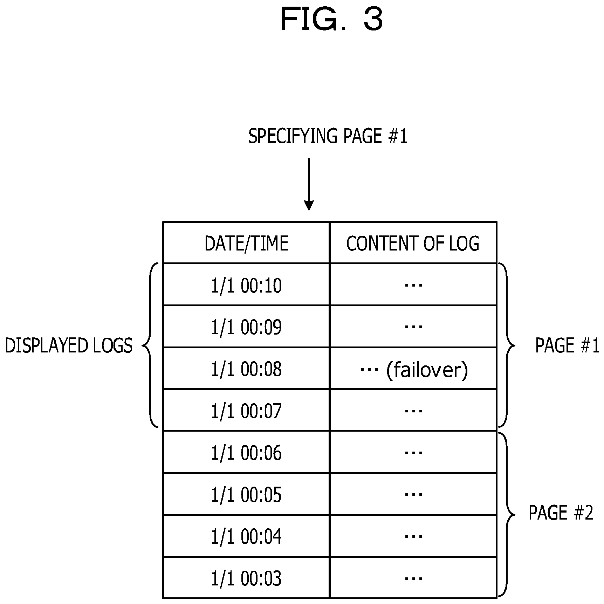

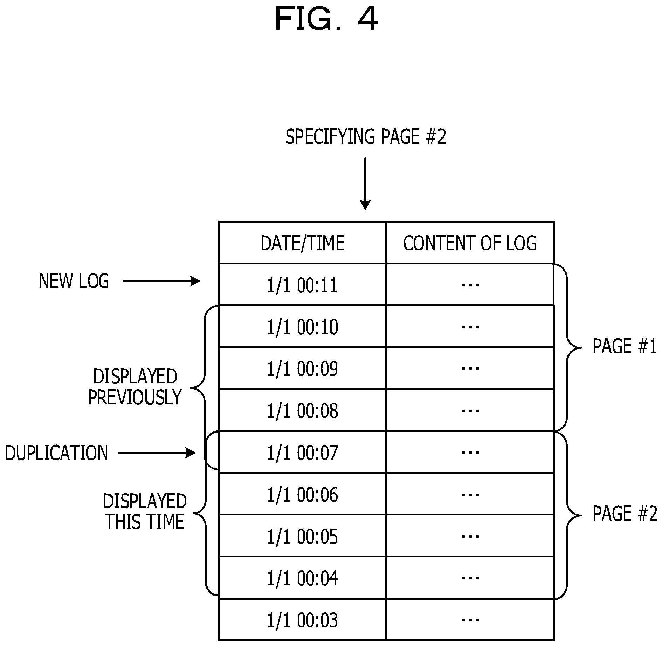

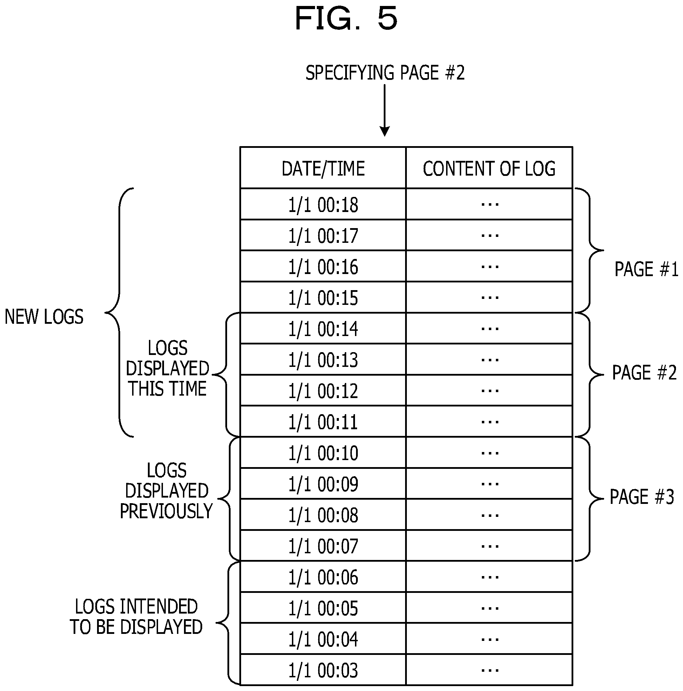

An example of a manner of displaying logs on a page-by-page basis is described below. FIG. 3 is a diagram illustrating an example of a manner of displaying logs for a case where page #1 is specified. FIG. 4 is a diagram illustrating a first example of a manner of displaying logs for a case where page #2 is specified. FIG. 5 is a diagram illustrating a second example of a manner of displaying logs for a case where page #2 is specified.

Let it be assumed here by way of example that a user performs an operation on the terminal apparatus 1 to specify page #1. In response to the operation performed by the user, the terminal apparatus 1 transmits a log acquisition request specifying page #1 to the management server 4. The management server 4 acquires log data corresponding to the page #1 from the database server 5, and transmits the acquired log data to the terminal apparatus 1.

The terminal apparatus 1 displays page #1 of the log on the display apparatus 2 based on the log data received from the management server 4. As illustrated in FIG. 3, the log data includes date/time (log occurrence date/time) and a log content. In the example illustrated in FIG. 3, the log is displayed such that four rows (four records) are included in one page. Furthermore, in the example illustrated in FIG. 3, a latest log is displayed on page #1.

In the example illustrated in FIG. 3, a failover occurs in a log at 1/1 00:08. The failover indicates, for example, that an abnormality occurs in a server being in operation and thus switching occurs to a secondary server.

To get to know the cause of the failover, the user may access a log older than the log displayed on page #1. For this purpose, let it be assumed that the user operates the terminal apparatus 1 to specify page #2. In response to the operation performed by the user, the terminal apparatus 1 transmits a log acquisition request specifying page #2 to the management server 4. The management server 4 acquires log data corresponding to page #2 from the database server 5, and transmits the acquired log data to the terminal apparatus 1.

The terminal apparatus 1 displays page #2 on the display apparatus 2. Let it be assumed here that, as illustrated in FIG. 4, one row of new log occurs during a period from the acquisition, by the management server 4, the log data corresponding to page #1 till the acquisition of the log data corresponding to page #2. The new log is incorporated in page #1, and thus the log of date of 1/1 00:07 displayed on page #1 in FIG. 3 is incorporated in page #2. That is, although the next page is specified as the page to be displayed, the content of displayed page overlaps the content of the previous page.

Next, an example is described below in which new eight rows of logs are added during a period from a time when the management server 4 acquires log data of page #1 to a time when the management server 4 acquires log data of page #2.

Let it be assumed that after the screen illustrated in FIG. 3 is displayed by the terminal apparatus 1, a user operates the terminal apparatus 1 to specify page #2 to see logs older than the logs displayed on page #1. In response to the operation performed by the user, the terminal apparatus 1 transmits a log acquisition request specifying page #2 to the management server 4. The management server 4 acquires log data corresponding to page #2 from the database server 5, and transmits the acquired log data to the terminal apparatus 1.

The terminal apparatus 1 displays page #2 on the display apparatus 2. Let it be assumed here that eight rows of new logs occur during a period from the acquisition of the log data of page #1 illustrated in FIG. 3 till the acquisition of the log data of page #2 by the management server 4. The new logs are incorporated in page #1 and page #2. Thus, the terminal apparatus 1 displays the new logs on page #2 as illustrated in FIG. 5. That is, although the user tried to see logs older than those displayed on page #1, the displayed logs are newer than the previously displayed logs.

In a case where logs are displayed on the page-by-page basis as illustrated in FIGs. 3 to 5, there is a possibility that displayed logs are different from what is intended to be displayed by a user. In this case, the user again performs an operation to issue a request, which may result in an increase in operation load in log search. To process the request issued again, the management server 4 and the database server 5 may have an increase in processing load, an increase in communication load may occur in communication between apparatuses.

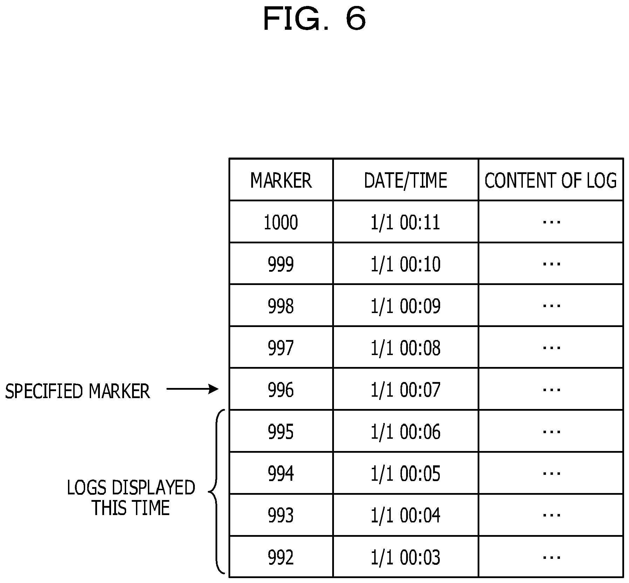

A method of displaying logs is described below for a case where a starting position is specified. FIG. 6 illustrates a first example of a manner of displaying logs for a case where a start position is specified.

Let it be assumed here that, to see a log at a particular position, a user performs an operation on the terminal apparatus 1 to specify 996 as a marker indicating a log acquisition start position. In response to the operation by the user, the terminal apparatus 1 transmits, to the management server 4, a log acquisition request in which 996 is specified as the marker. In the present example, it is assumed by way of example that four rows of logs following the log indicated by the specified marker are to be acquired. The management server 4 acquires log data corresponding to markers from 995 to 992 from the database server 5, and transmits the acquired log data to the terminal apparatus 1.

The terminal apparatus 1 displays logs on the display apparatus 2 based on the log data received from the management server 4. In the present example, the terminal apparatus 1 displays the logs corresponding to the markers from 995 to 992 on the display apparatus 2 as illustrated in FIG. 6.

Let it be assumed here that to see a new log which is immediately next to logs the user is now seeing, the user performs an operation on the terminal apparatus 1 to specify a marker indicting a log acquisition start position. For example, there is a possibility that when a user is seeing past logs to find a cause of an error, if the cause is not found, then the user may try to see other logs. In this specific example, as described above, four rows of logs following the log indicated by the specified maker are displayed.

Therefore, to see new logs, the user makes a calculation according to equation (1) to obtain a value of the maker to be specified.

$$\text{specified marker} = \text{maximum marker of logs being displayed} + \text{the number of logs per page} + 1 \quad (1)$$

In the example illustrated in FIG. 6, the number of logs per page is four rows, and the maximum maker being displayed is 995 in the example illustrated in FIG. 6. Thus, to see new logs following those displayed in FIG. 6, the user may calculate the marker to be specified as follows.

$$995 + 4 + 1 = 1000$$

According to the result of the calculation described above, the user performs an operation on the terminal apparatus 1 to specify 1000 as the marker indicating the log acquisition start position. In response to the operation performed by the user, the terminal apparatus 1 transmits a log acquisition request specifying 1000 as the marker to the management server 4. The management server 4 acquires log data corresponding to markers from 999 to 996 from the database server 5, and transmits the acquired log data to the terminal apparatus 1.

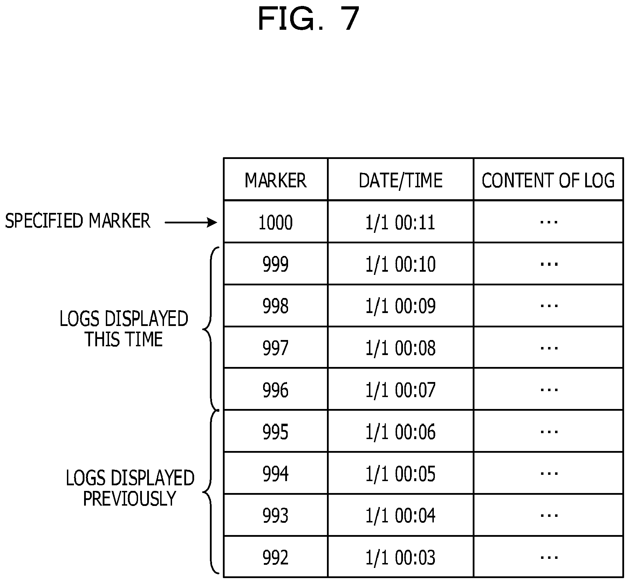

FIG. 7 illustrates a second example of a manner of displaying logs for a case where a start position is specified. The terminal apparatus 1 displays logs on the display apparatus 2 based on the log data received from the management server 4. In the present example, the terminal apparatus 1 displays logs corresponding to markers from 999 to 996 on the display apparatus 2 as illustrated in FIG. 7.

As described above, in the method of displaying logs according to the specified start position, to see logs newer than logs being currently displayed, a user calculates the start position (the marker in the example described above) to be specified. The calculation of the start position by the user imposes a large operation load on the user in the log search.

<Example of management server>

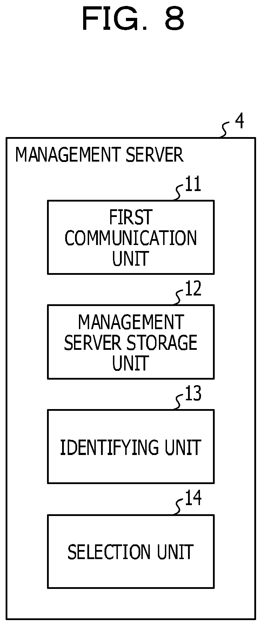

FIG. 8 is a diagram illustrating an example of a management server. The management server 4 includes a first communication unit 11, a management server storage unit 12, an identifying unit 13, and a selection unit 14.

The first communication unit 11 receives the acquisition request for the log (log acquisition request) from the terminal apparatus 1. The log acquisition request is, for example, an HTTP request including a user ID, a DBID of a DB from which logs are to be acquired and information indicating a log acquisition range. The information indicating the log acquisition range is, for example, information indicating page numbers.

The management server storage unit 12 stores history management information regarding log acquisition requests accepted in the past from the terminal apparatus 1. Details of the history management information will be described later.

When a log acquisition request issued by the terminal apparatus 1 is accepted via the first communication unit 11, the identifying unit 13 refers to the history management information stored in the management server storage unit 12 and identifies an acquisition request occurrence pattern in terms of a plurality of acquisition requests accepted from the terminal apparatus 1.

The acquisition request occurrence pattern indicates, for example, a frequency of occurrences of acquisition request. The acquisition request occurrence pattern includes, for example, a time of accepting a present log acquisition request, and a time of accepting an immediately previous log acquisition request for the same DB issued by the same user as those of the present acquisition request. The acquisition request occurrence pattern may be, for example, an average time interval of a plurality of log acquisition requests for the same DB issued by the same user as those of the present acquisition request.

Based on the pattern identified by the identifying unit 13, the selection unit 14 selects a storage area to be accessed from storage areas of the database server 5, that is, either one of a storage area in which logs are stored and a storage area in which cached log data is stored.

The first communication unit 11 transmits, to the database server 5, the acquisition request accepted from the terminal apparatus 1 and the identification information identifying the storage area selected by the selection unit 14.

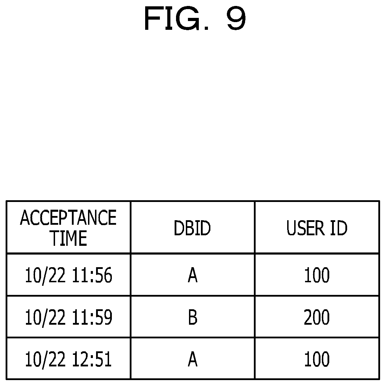

FIG. 9 is a diagram illustrating an example of history management information regarding acquisition requests issued in the past. The history management information is stored in the management server storage unit 12. As illustrated in FIG. 9, in the history management information, an acceptance time, a DB Identification (ID), and a user ID are described in association with each other. The acceptance time is a time at which a log acquisition request from the terminal apparatus 1 is accepted by the management server 4. A DBID and a user ID included in the log acquisition request are described in the history management information.

<Example of database server according to first embodiment

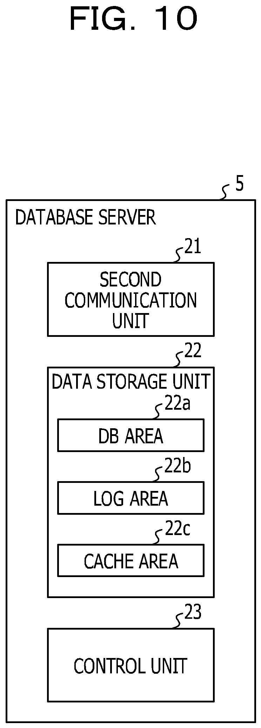

FIG. 10 is a diagram illustrating an example of a database server 5 according to a first embodiment. The database server 5 includes a second communication unit 21, a data storage unit 22, and a control unit 23.
The second communication unit 21 receives a log acquisition request for a log area 22b or a cache area 22c from the management server 4.
The data storage unit 22 includes a DB area 22a, a log area 22b, and a cache area 22c. The log area 22b is an example of the first storage unit. The cache area 22c is an example of the second storage unit. Note that the first storage unit and the second storage unit may be disposed in different storage apparatuses.
The DB area 22a stores a DB. Each time a log is accepted in response to a command from the control unit 23, the log area 22b stores the log. In the present embodiment, the log area 22b stores log data of the DB stored in the DB area 22a. The log data is updated, for example, when a new event occurs in the DB stored in the DB area 22a. The log data may include, for example, a plurality of log files. The log data may be, for example, a DB in which a log is stored.
The cache area 22c stores, under the control of the control unit 23, log data as cached log data in response to a particular event such that log data existing in the log area as of when the particular event occurs is stored as cached log data in the cache area 22c. The particular event is, for example, accepting of a request for acquisition (an acquisition request) for a log stored in the log area 22b.
That is, cached log data stored in the cache area 22c is a copy of log data existing as of a particular time, and the cached log data is not updated even when a new event related to logs being tried to be accessed occurs in the DB stored in the DB area 22a. The cached log data is generated, for example, for each DB and for each user. In a case where the log data includes a plurality of log files, the cached log data is, for example, a copy of a newest log file. The control unit 23 performs various processes in the database server 5.

<Example of flow of process performed by management server>

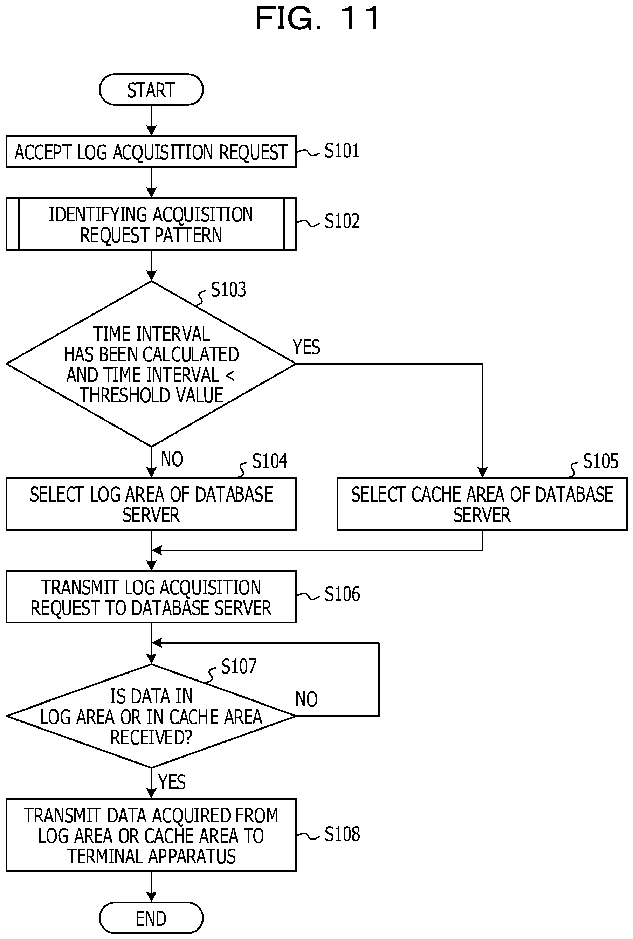

FIG. 11 is a flow chart illustrating an example of a processing flow performed by a management server. The first communication unit 11 accepts a log acquisition request from the terminal apparatus 1 (step S101).
When a log acquisition request from the terminal apparatus 1 is accepted via the first communication unit 11, the identifying unit 13 refers to the history management information stored in the management server storage unit 12 and identifies an acquisition request occurrence pattern for a plurality of acquisition requests accepted from the terminal apparatus 1 (step S102). The acquisition request occurrence pattern includes, for example, a time of accepting a present acquisition request and a time of accepting an immediately previous log acquisition request including the same user ID and the same DBID as those included in the present acquisition request. The process in step S102 will be described in further detail later.
The selection unit 14 determines whether the calculation has been performed as to the time interval from the time of accepting the present acquisition request to the time of accepting the immediately previous log acquisition request including the same user ID and the same DBID as those included in the present acquisition request, and determines whether the time interval is larger than a predetermined threshold value (step S103). The predetermined threshold value may be, for example, two seconds. The time interval is an example of a pattern.
In a case where NO in step S103, the selection unit 14 selects, as the storage area from which to acquire the log, the log area 22b included in the data storage unit 22 of the database server 5 (step S104). In a case where YES in step S103, the selection unit 14 selects, as the storage area from which to acquire the log, the cache area 22c included in the data storage unit 22 of the database server 5 (step S105). In the case where YES in step S103, the user may be searching for logs.
The first communication unit 11 transmits the log acquisition request accepted from the terminal apparatus 1 and the identification information identifying the storage area selected by the selection unit 14 to the database server 5 (step S106). Note that the identification information identifying the storage area selected by the selection unit 14 is identification information identifying the log area 22b or the cache area 22c.
In a case where the first communication unit 11 receives log data or cached log data from the database server 5 (YES in step S107), the first communication unit 11 transmits the received log data or cached log data to the terminal apparatus 1 (step S108). In a case where first communication unit 11 does not receive either log data or cached log data (NO in step S107), the process does not proceed to a next step.

As described above, when the user is in the middle of searching for logs (YES in step S103), the management server 4 selects the cache area 22c and acquires cached log data therefrom. The cached log data is not updated even when a new log occurs, and thus no change occurs in the log content in the page from the log content accessed previously. This may avoid displaying a log that is not intended by a user, which results in a reduction in the number of operations for acquiring logs, and thus it is possible to reduce the operation load imposed on the management server 4 during the log search process. It is also possible to reduce a processing load imposed on the management server 4 and the database server 5, a communication load between the terminal apparatus 1 and the management server 4 a communication load between the management server 4 and the database server 5, and the like.

When the management server 4 according to the present embodiment is used, logs are displayed on the page-by-page basis, and thus, unlike the method described above with reference to FIGs. 6 and 7 in which a start position is specified by a user, which may bother the user, a reduction in operation load in the log search process is achieved in the present method.

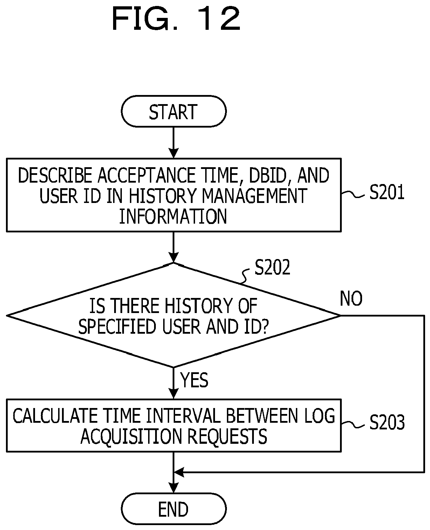

FIG. 12 is a flow chart illustrating a flow of a process in step S102 in FIG. 11. The identifying unit 13 describes, in the history management information, an acceptance time of a log acquisition request received from the terminal apparatus 1 and a DBID and a user ID specified in the log acquisition request (step S201).

The identifying unit 13 determines whether history management information includes history regarding a combination of a user ID and a DBID that are identical to a combination of the user ID and the DBID specified in the log acquisition request (step S202). In a case where NO in step S202, the process in step S102 is ended.

In a case where YES in step S202, the identifying unit 13 determines a time interval by calculating a difference between an acceptance time of the present acquisition request and an acceptance time of an immediately previous log acquisition request for the same DB from the same user as that of the present acquisition request (step S203).

<Example of flow of process performed by database server according to first embodiment

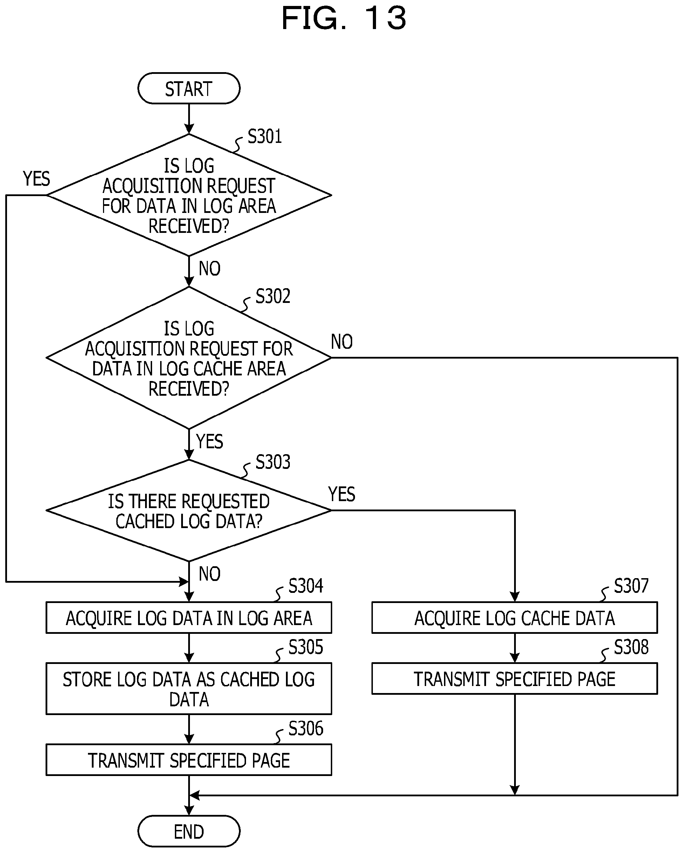

FIG. 13 is a flow chart illustrating a flow of a process performed by a database server according to the first embodiment. The process illustrated in FIG. 13 is performed repeatedly, for example, every predetermined period.

The control unit 23 determines whether a log acquisition request for the log area 22b is received from the management server 4 (step S301). For example, the control unit 23 determines whether a log acquisition request together with identification information of the log area 22b is received from the management server 4.

In a case where YES in step S301, the control unit 23 acquires log data corresponding to a DBID included in the log acquisition request from the log area 22b (step S304).

The control unit 23 stores the log data acquired from the log area 22b in the cache area 22c such that the log data is stored as cached log data in association with the DBID and the user ID included in the log acquisition request (step S305). In a case where there is already cached log data stored in the cache area 22c in association with the DBID and the user ID included in the log acquisition request, the control unit 23 updates the cached log data in the cache area 22c with the log data acquired from the log area 22b. The second communication unit 21 transmits, to the management server 4, part (pages to be transmitted) of the log data corresponding to page numbers specified to be transmitted in the log acquisition request (step S306).

In a case where NO in step S301, a determination is made as to whether a log acquisition request for the cache area 22c has been received from the management server 4 (step S302). For example, the control unit 23 determines whether a log acquisition request has been received together with identification information of the cache area 22c. In a case where NO in step S302, the control unit 23 ends the process.

In a case where YES in step S302, the control unit 23 determines whether there is cached log data requested to be acquired (step S303). As described above, cached log data is generated for each user ID and for each DBID. Therefore, for example, the control unit 23 determines whether there is cached log data corresponding to the user ID and the DBID included in the log acquisition request. In a case where NO in step S303, there is no cached log data corresponding to the user ID and the DBID included in the log acquisition request, and thus the process proceeds to step S304.

In a case where YES in step S303, the control unit 23 acquires specified cached log data from the cache area 22c (step S307).

The second communication unit 21 transmits, to the management server 4, part of the cached log data corresponding to page numbers specified in the log acquisition request (step S308).

<Example of database server according to second embodiment

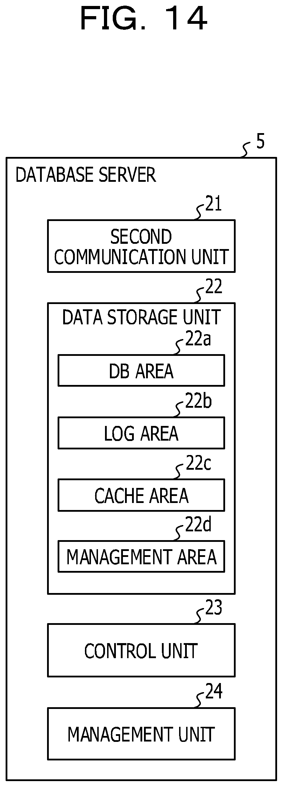

FIG. 14 is a diagram illustrating an example of a database server 5 according to a second embodiment. As illustrated in FIG. 2, the database server 5 according to the second embodiment includes a second communication unit 21, a data storage unit 22, a control unit 23, and a management unit 24. The data storage unit 22 includes a DB area 22a, a log area 22b, a cache area 22c, and a management area 22d. The management area 22d is an example of the third storage unit.

The database server 5 according to the second embodiment is different from the database server 5 according to the first embodiment in that the management area 22d and the management unit 24 are provided. A further description of elements similar to those according to the first embodiment is omitted.

The management area 22d stores correspondence information indicating a correspondence between identification information of a user and information indicating a top position of cached log data stored in the cache area 22c as of when a particular event occurs in response to a log acquisition request by the user. The identification information of the user is, for example, a user ID. Information indicating the top position is, for example, a top-position log ID.

In a case where a log acquisition request is received together with identification information of the cache area 22c, the management unit 24 acquires a top-position log ID based on a user ID of a requester of the log acquisition request and the correspondence information. Based on the top-position log ID, the management unit 24 acquires an acquisition range (pages to be acquired) of the cached log data stored in the cache area 22c.

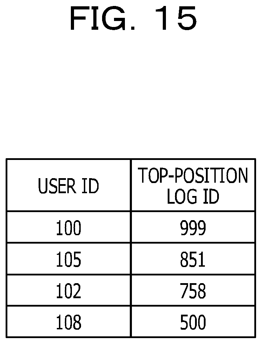

FIG. 15 illustrates an example of correspondence information. The correspondence information indicates a relationship between a user ID and a top-position log ID. The top-position log ID indicates the top position of the cached log data as of the immediately previous updating.

The correspondence information is updated when the database server 5 receives a log acquisition request for the log area 22b from the management server 4 and the cached log data in the cache area 22c is updated with the log data in the log area 22b.

The management unit 24 updates the correspondence information such that the top-position log ID corresponding to the user ID of the requester of the received log acquisition request is updated with the top-position log ID of the stored cached log data. Furthermore, the management unit 24 deletes, from the correspondence information, records including a top-position log ID that are not included in the updated cached log data.

<Example of flow of process performed by database server according to second embodiment

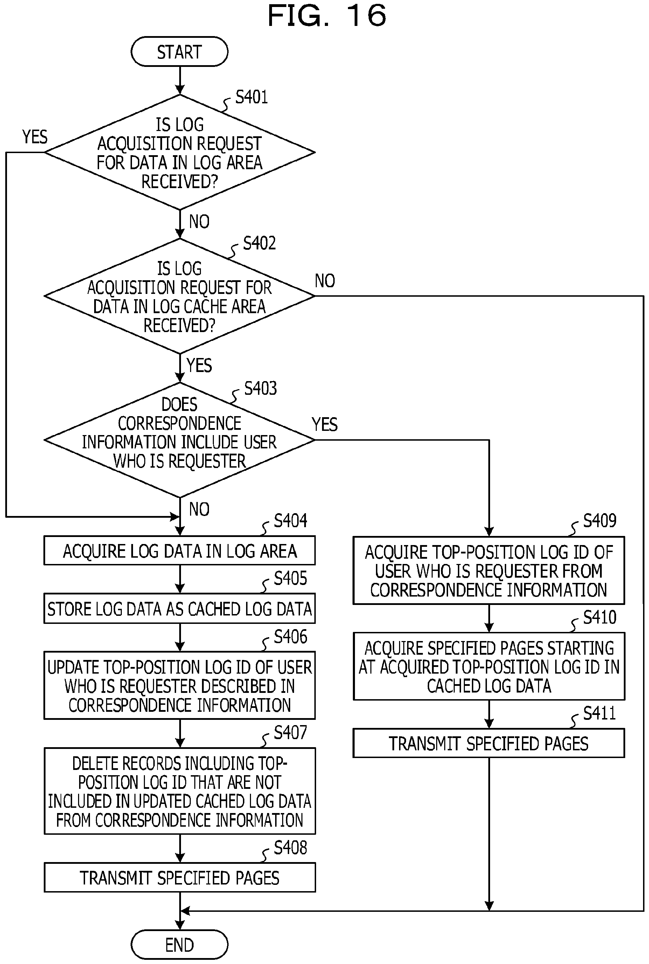

FIG. 16 is a flow chart illustrating an example of a flow of a process performed by a database server. The process illustrated in FIG. 16 may be executed, for example, every predetermined period.

The control unit 23 determines whether a log acquisition request for the log area 22b has been received from the management server 4 (step S401). For example, the control unit 23 determines whether a log acquisition request together with identification information of the log area 22b is received from the management server 4.

In a case where YES in step S401, the control unit 23 acquires log data corresponding to a DBID included in the log acquisition request from the log area 22b (step S404).

The control unit 23 stores the log data acquired from the log area 22b in the cache area 22c such that the log data is stored as cached log data in association with the DBID and the user ID included in the log acquisition request (step S405).

In a case where there is already cached log data stored in the cache area 22c in association with the DBID and the user ID included in the log acquisition request, the control unit 23 updates the cached log data in the cache area 22c with the log data acquired from the log area 22b.

The management unit 24 updates the correspondence information such that the top-position log ID corresponding to the user ID of the requester of the log acquisition request is updated with the top-position log ID of the stored cached log data stored in step S405 (step S406). The management unit 24 identifies the requester, for example, by the user ID included in the log acquisition request.

The management unit 24 deletes, from the correspondence information, records including a top-position log ID that are not included in the updated cached log data (step S407). This is performed because the correspondence information is used when data is acquired from the cached log data.

The second communication unit 21 transmits, to the management server 4, part (pages to be transmitted) of the log data corresponding to page numbers specified to be transmitted in the log acquisition request (step S408).

In a case where NO in step S401, a determination is made as to whether a cached log data acquisition request for data stored in the cache area 22c has been received from the management server 4 (step S402). For example, the control unit 23 determines whether a log acquisition request has been received together with identification information indicating the cache area 22c. In a case where NO in step S402, the control unit 23 ends the process.

In a case where YES in step S402, the management unit 24 determines whether the correspondence information includes a user of interest (step S403). In a case where NO in step S403, the process proceeds to step S404.

In a case where YES in step S403, the management unit 24 acquires, from the correspondence information, the top-position log ID associated with the user ID of the requester of the log acquisition request (step S409). The management unit 24 identifies the requester, for example, by the user ID included in the log acquisition request.

The management unit 24 acquires cached log data within the acquisition range starting from the acquired top-position log ID, corresponding to the page numbers specified in the log acquisition request (step S410).

The second communication unit 21 transmits, to the management server 4, the cached log data acquired, in step S410, according to the specified page numbers (step S411).

In the present embodiment, as described above, the cached log data is generated for each DB and is used in common by a plurality of users. Therefore, it is possible to reduce the data size of the cached log data compared with a case in which cached log data is generated for each user and for each DB. In the present embodiment, the correspondence information is stored because the data size of the correspondence information is generally smaller than the data size of the cached log data.

Furthermore, because a previous access start position is described in the correspondence information for each user, a log intended by a user is displayed although the cached log data is not stored for each user, and thus it is possible to reduce the operation load in the log search process.

<Example of process performed by database server according to second embodiment>

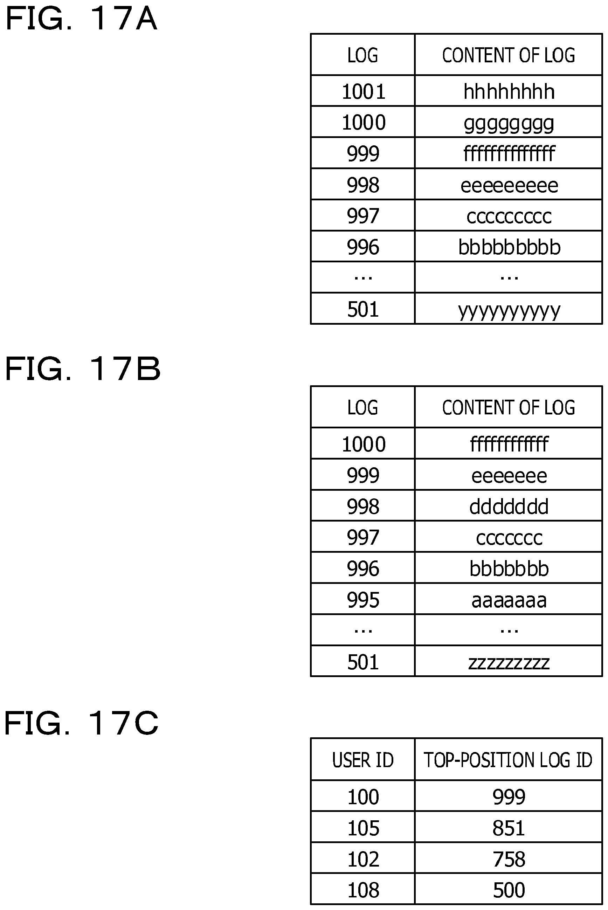

Next, a specific example of the process performed by the database server according to the second embodiment is described below. FIGs. 17A, 17B, and 17C are diagrams illustrating various pieces of information in a state before subjected to a process by a database server. FIG. 17A illustrates an example of log data. The log data is recorded such that a content of a log is recorded for each log ID.

FIG. 17B illustrates an example of cached log data in a state in which updating is not yet performed. The cached log data illustrated in FIG. 17B is different from the log data illustrated in FIG. 17A in that there is no log corresponding to a log ID of "1001" while there is data corresponding to a log ID of "500".

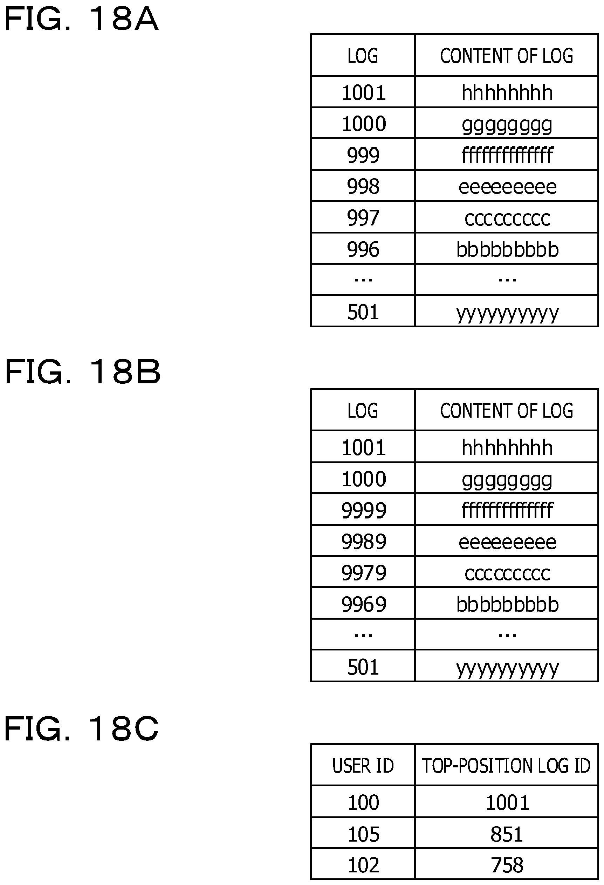

FIG. 17C illustrates an example of correspondence information in a state in which updating is not yet performed. FIGs. 18A, 18B, and 18C are diagrams illustrating various pieces of information in a state after subjected to a process by a database server. More specifically, FIG. 18A, 18B, and 18C illustrate various pieces of information obtained as a result of performing the process in steps S404 to S407 in FIG. 16 on the various pieces of information illustrated in FIGs. 17A, 17B, and 17C. FIG. 18A illustrates an example of log data, which is the same as the log data illustrated in FIG. 17A.

FIG. 18B illustrates an example of updated cached log data. In the present example, it is assumed that via processes in steps S404 and S405, the cached log data illustrated in FIG. 17B is updated with the log data illustrated in FIG. 17A. The data illustrated in FIG. 18A is the same as that illustrated in FIG. 17A as described above, and thus the cached log data illustrated in FIG. 18B is the same as the log data illustrated in FIG. 17A and that illustrated in FIG. 18A.

FIG. 18C illustrates an example of updated correspondence information. In the present example, it is assumed that log data is acquired in response to an acquisition request issued by a user whose user ID is "100". Thus, in FIG. 18C, a top-position log ID for the user whose user ID is "100" is updated in the process in step S406 to "1001" which is a top-position log ID of the cached log data.

Furthermore, in the present example, as illustrated in FIG. 17B, a log with a log ID of 500 is removed from the cached log data. Thus, although in FIG. 17C, there is data with a user ID of "108" and with a top-position log ID of "500", this data no longer exists in FIG. 18C because the data is removed in the process in step S407.

<Example of hardware configuration of management server>

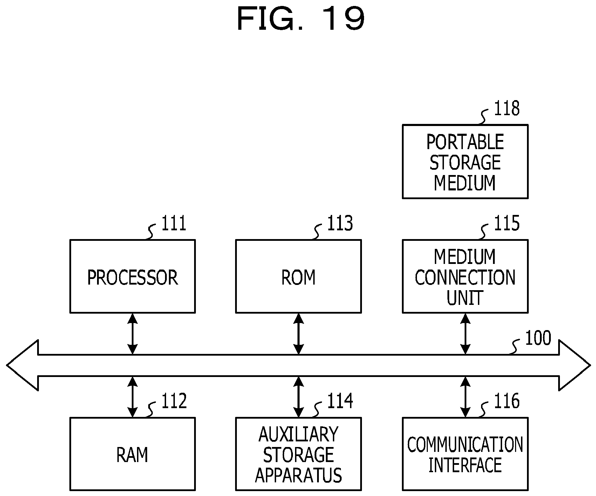

Next, referring to FIG. 19, an example of a hardware configuration of the management server 4 is described below. In this example, as illustrated in FIG. 19, a processor 111, a Random Access Memory (RAM) 112, and a Read Only Memory (ROM) 113 are connected to a bus 100. Furthermore, an auxiliary storage apparatus 114, a medium connection unit 115, and a communication interface 116 are also connected to the bus 100.

The processor 111 executes a program loaded in the RAM 112. The program executed may be a control program that performs processes according to the embodiment.

The ROM 113 is a nonvolatile storage apparatus storing a program to be loaded in the RAM 112. The auxiliary storage apparatus 114 is a storage apparatus in which various kinds of information are stored. For example, a hard disk drive, a semiconductor memory, or the like may be applied to the auxiliary storage apparatus 114. A control program that performs a process according to the embodiment may be stored in the auxiliary storage apparatus 114.

The medium connection unit 115 is provided such that the medium connection unit 115 is connectable to a portable storage medium 118. As for the portable storage medium 118, a portable memory, an optical disk (for example, a Compact Disc (CD) or a Digital Versatile Disc (DVD)), a semiconductor memory, or the like may be employed. A control program that performs a process according to the embodiment may be stored in the portable storage medium 118.

The management server storage unit 12 illustrated in FIG. 8 may be realized by the RAM 112, the auxiliary storage apparatus 114, or the like. The first communication unit 11 illustrated in FIG. 8 may be realized by the communication interface 116. The identifying unit 13 and the selection unit 14 illustrated in FIG. 8 may be realized by executing a given control program by the processor 111.

The RAM 112, the ROM 113, the auxiliary storage apparatus 114, and the portable storage medium 118 are each an example of a computer-readable physical storage medium. Each of these physical storage media is not a temporary medium such as a signal carrier wave.

<Example of hardware configuration of database server>

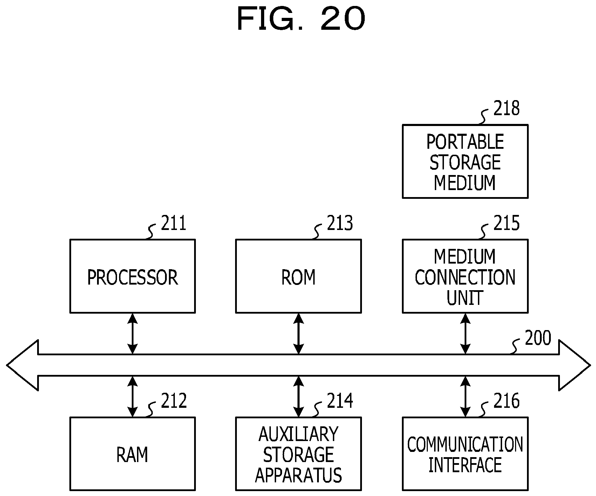

Next, referring to FIG. 20, an example of a hardware configuration of the database server 5 is described below. In this example as illustrated in FIG. 20, a processor 211, a Random Access Memory (RAM) 212, and a Read Only Memory (ROM) 213 are connected to a bus 200. An auxiliary storage apparatus 214, a medium connection unit 215, and a communication interface 216 are also connected to the bus 200.

The processor 211 executes a program loaded in the RAM 212. The program executed may be a control program that performs processes according to an embodiment.

The ROM 213 is a nonvolatile storage apparatus storing a program to be loaded in the RAM 212. The auxiliary storage apparatus 214 is a storage apparatus in which various kinds of information are stored. For example, a hard disk drive, a semiconductor memory, or the like may be applied to the auxiliary storage apparatus 214. A control program that performs a process according to an embodiment may be stored in the auxiliary storage apparatus 214.

The medium connection unit 215 is provided such that the medium connection unit 215 is connectable to a portable storage medium 218. As for the portable storage medium 218, a portable memory, an optical disk (for example, a Compact Disc (CD) or a Digital Versatile Disc (DVD)), a semiconductor memory, or the like may be employed. A control program that performs a process according to the embodiment may be stored in the portable storage medium 218.

The data storage unit 22 illustrated in FIG. 10 or FIG. 14 may be realized by the RAM 212, the auxiliary storage apparatus 214, or the like. The second communication unit 21 illustrated in FIG. 10 or FIG. 14 may be realized by the communication interface 216. The control unit 23 illustrated in FIG. 10 or FIG. 14 and the management unit 24 illustrated in FIG. 14 may be realized by executing given control programs by the processor 211.

The RAM 212, the ROM 213, the auxiliary storage apparatus 214 and the portable storage medium 218 are each an example of a computer-readable physical storage medium. Each of these physical storage media is not a temporary medium such as a signal carrier wave.

<Other embodiments>

The present disclosure is not limited to the embodiments described above, but various modifications or changes are possible without departing from the sprit and scope of the present disclosure.

REFERENCE SIGNS LIST

1 terminal apparatus
2 display apparatus
3 network
4 management server
5 database server
11 first communication unit
12 management server storage unit
13 identifying unit
14 selection unit
21 second communication unit
22 data storage unit
22a DB area
22b log area
22c cache area
22d management area
23 control unit
24 management unit
100, 200 bus
111, 211 processor
112, 212 RAM

113, 213 ROM
114, 214 auxiliary storage apparatus
115, 215 medium connection unit
116, 216 communication interface
118, 217 portable storage medium

**Claims**

1. A log output control apparatus comprising:
   a processor configured to:

   when a first log acquisition request is accepted from a terminal apparatus, perform a selection of a specific storage from a first storage and a second storage in accordance with log acquisition requests which has been accepted from the terminal apparatus before the first log acquisition request, the first storage being configured to store each of logs in response to accepting each of the logs, the second storage being configured to store a log stored in the first storage in response to an occurrence of an event, the first storage and the second storage being included in a server apparatus,
   transmit the first acquisition request and identification information of the specific storage to the server apparatus, and
   respond a log to the terminal apparatus, the log being received from the server apparatus which obtained the log from the specific storage indicated by the identification information.

2. The log output control apparatus according to claim 1, wherein the selection is performed in accordance with a frequency of the log acquisition requests.

3. The log output control apparatus according to claim 1,
   wherein in a case where a time interval at which the log acquisition requests accepted from the terminal apparatus is no less than a threshold, the first storage unit is selected as the specific storage unit, and
   wherein in a case where the time interval is less than the threshold, the second storage unit is selected as the specific storage unit.

4. The log output control apparatus according to claim 1, wherein the first acquisition request includes information indicating an acquisition range of logs to be acquired from the first storage or the second storage.

5. The log output control apparatus according to claim 1, wherein the event is accepting, by the server apparatus, of a log acquisition request for a log stored in the first storage unit.

6. A database server comprising:
   a control unit configured to:

   when a log is accepted, store the log in a first storage unit,
   when a first acquisition request indicating the first storage is accepted,

   acquire a first log from the first storage,
   transmit the first log to a requester of the first acquisition request, and
   store a plurality of logs stored in the first storage into a second storage, and

   when a second acquisition request indicating the second storage is acquired,

   perform acquisition of a second log from the second storage, and
   transmit the second log to a requester of the second acquisition request.

7. A database server according to claim 6, wherein the control unit further configured to:

   when the first acquisition request is accepted, store correspondence information in a third storage, the correspondence information indicating user identification information included in the first acquisition request and information indicating a top position of the plurality of logs stored in the second storage, and

when a second acquisition request is acquired, specify the top position based on the user identification information included in the second acquisition request and the correspondence information stored in the third storage, wherein the acquisition of the second log is performed in accordance with the top position.

8. A log output control method executed by a computer, the method comprising:

when a first log acquisition request is accepted from a terminal apparatus, selecting a specific storage from a first storage and a second storage in accordance with log acquisition requests which has been accepted from the terminal apparatus before the first log acquisition request, the first storage being configured to store each of logs in response to accepting each of the logs, the second storage being configured to store a log stored in the first storage in response to an occurrence of an event, the first storage and the second storage being included in a server apparatus,

transmitting the first acquisition request and identification information of the specific storage to the server apparatus, and

responding a log to the terminal apparatus, the log being received from the server apparatus which obtained the log from the specific storage indicated by the identification information.

9. The log output control method according to claim 8, wherein the selecting is performed in accordance with a frequency of the log acquisition requests.

10. The log output control method according to claim 8,
wherein in a case where a time interval at which the log acquisition requests accepted from the terminal apparatus is no less than a threshold, the first storage unit is selected as the specific storage unit, and
wherein in a case where the time interval is less than the threshold, the second storage unit is selected as the specific storage unit.

11. The log output control method according to claim 8, wherein the first log acquisition request includes information indicating an acquisition range of logs to be acquired from the first storage or the second storage.

12. The log output control method according to claim 8, wherein the event is accepting, by the server apparatus, of a log acquisition request for a log stored in the first storage unit.

13. A log output control program that causes a computer to execute a process comprising:

when a first log acquisition request is accepted from a terminal apparatus, selecting a specific storage from a first storage and a second storage in accordance with log acquisition requests which has been accepted from the terminal apparatus before the first log acquisition request, the first storage being configured to store each of logs in response to accepting each of the logs, the second storage being configured to store a log stored in the first storage in response to an occurrence of an event, the first storage and the second storage being included in a server apparatus,

transmitting the first acquisition request and identification information of the specific storage to the server apparatus, and

responding a log to the terminal apparatus, the log being received from the server apparatus which obtained the log from the specific storage indicated by the identification information.

# FIG. 1

```
┌──────────────┐ 1          3          ┌──────────────┐ 4
│  TERMINAL    │──────────⊗──────────│  MANAGEMENT  │
│  APPARATUS   │                       │    SERVER    │
└──────────────┘                       └──────────────┘
       │                                       │
┌──────────────┐ 2                     ┌──────────────┐ 5
│   DISPLAY    │                       │   DATABASE   │
│  APPARATUS   │                       │    SERVER    │
└──────────────┘                       └──────────────┘
```

FIG. 2

http://dbaas/logapi/log1/?page=1

HTTP REQUEST

1

TERMINAL APPARATUS

3

MANAGEMENT SERVER

4

LOG DATA

```
[
{"no" : "1","date" : "2016-07-02-11:54:01","log" : "SQL INCLUDE GRAMMATICAL ERROR."},
{"no" : "2","date" : "2016-07-02-11:54:02","log" : "SQL OF *** HAS BEEN ACCEPTED"},
{"no" : "3","date" : "2016-07-02-11:54:03","log" : "SQL OF *** HAS BEEN ACCEPTED"},
]
```

2

DISPLAY APPARATUS

5

DATABASE SERVER

# FIG. 3

SPECIFYING PAGE #1

| DATE/TIME | CONTENT OF LOG |
|-----------|----------------|
| 1/1 00:10 | ⋯ |
| 1/1 00:09 | ⋯ |
| 1/1 00:08 | ⋯ (failover) |
| 1/1 00:07 | ⋯ |
| 1/1 00:06 | ⋯ |
| 1/1 00:05 | ⋯ |
| 1/1 00:04 | ⋯ |
| 1/1 00:03 | ⋯ |

DISPLAYED LOGS

PAGE #1

PAGE #2

# FIG. 4

SPECIFYING PAGE #2

| DATE/TIME | CONTENT OF LOG |
|---|---|
| 1/1 00:11 | · · · |
| 1/1 00:10 | · · · |
| 1/1 00:09 | · · · |
| 1/1 00:08 | · · · |
| 1/1 00:07 | · · · |
| 1/1 00:06 | · · · |
| 1/1 00:05 | · · · |
| 1/1 00:04 | · · · |
| 1/1 00:03 | · · · |

NEW LOG →

DISPLAYED PREVIOUSLY

DUPLICATION →

DISPLAYED THIS TIME

PAGE #1

PAGE #2

# FIG. 5

SPECIFYING PAGE #2

| DATE/TIME | CONTENT OF LOG |
|-----------|----------------|
| 1/1 00:18 | ・・・ |
| 1/1 00:17 | ・・・ |
| 1/1 00:16 | ・・・ |
| 1/1 00:15 | ・・・ |
| 1/1 00:14 | ・・・ |
| 1/1 00:13 | ・・・ |
| 1/1 00:12 | ・・・ |
| 1/1 00:11 | ・・・ |
| 1/1 00:10 | ・・・ |
| 1/1 00:09 | ・・・ |
| 1/1 00:08 | ・・・ |
| 1/1 00:07 | ・・・ |
| 1/1 00:06 | ・・・ |
| 1/1 00:05 | ・・・ |
| 1/1 00:04 | ・・・ |
| 1/1 00:03 | ・・・ |

NEW LOGS

LOGS DISPLAYED THIS TIME

LOGS DISPLAYED PREVIOUSLY

LOGS INTENDED TO BE DISPLAYED

PAGE #1

PAGE #2

PAGE #3

# FIG. 6

| MARKER | DATE/TIME | CONTENT OF LOG |
|---|---|---|
| 1000 | 1/1 00:11 | ··· |
| 999 | 1/1 00:10 | ··· |
| 998 | 1/1 00:09 | ··· |
| 997 | 1/1 00:08 | ··· |
| 996 | 1/1 00:07 | ··· |
| 995 | 1/1 00:06 | ··· |
| 994 | 1/1 00:05 | ··· |
| 993 | 1/1 00:04 | ··· |
| 992 | 1/1 00:03 | ··· |

SPECIFIED MARKER ⟶ (996)

LOGS DISPLAYED THIS TIME

# FIG. 7

| | MARKER | DATE/TIME | CONTENT OF LOG |
|---|---|---|---|
| SPECIFIED MARKER → | 1000 | 1/1 00:11 | ⋯ |
| | 999 | 1/1 00:10 | ⋯ |
| | 998 | 1/1 00:09 | ⋯ |
| LOGS DISPLAYED THIS TIME | 997 | 1/1 00:08 | ⋯ |
| | 996 | 1/1 00:07 | ⋯ |
| | 995 | 1/1 00:06 | ⋯ |
| | 994 | 1/1 00:05 | ⋯ |
| LOGS DISPLAYED PREVIOUSLY | 993 | 1/1 00:04 | ⋯ |
| | 992 | 1/1 00:03 | ⋯ |

# FIG. 8

**MANAGEMENT SERVER** — 4

| FIRST COMMUNICATION UNIT — 11 |

| MANAGEMENT SERVER STORAGE UNIT — 12 |

| IDENTIFYING UNIT — 13 |

| SELECTION UNIT — 14 |

# FIG. 9

| ACCEPTANCE TIME | DBID | USER ID |
|---|---|---|
| 10/22 11:56 | A | 100 |
| 10/22 11:59 | B | 200 |
| 10/22 12:51 | A | 100 |

# FIG. 10

DATABASE SERVER — 5

SECOND COMMUNICATION UNIT — 21

DATA STORAGE UNIT — 22

DB AREA — 22a

LOG AREA — 22b

CACHE AREA — 22c

CONTROL UNIT — 23

# FIG. 11

```
                    START
                      │
                      ▼
  ┌──────────────────────────────────┐
  │  ACCEPT LOG ACQUISITION REQUEST  │─── S101
  └──────────────────────────────────┘
                      │
                      ▼
  ┌──────────────────────────────────┐
  │     IDENTIFYING ACQUISITION      │─── S102
  │        REQUEST PATTERN           │
  └──────────────────────────────────┘
                      │
                      ▼
              ╱─────────────╲  S103
             ╱  TIME INTERVAL ╲
            ╱ HAS BEEN CALCULATED╲        YES
           ╱  AND TIME INTERVAL <  ╲──────────────┐
            ╲   THRESHOLD VALUE    ╱               │
             ╲                    ╱                │
              ╲─────────────────╱                 │
                      │ NO                         │
                      ▼ S104                       ▼ S105
  ┌──────────────────────────┐   ┌──────────────────────────────┐
  │ SELECT LOG AREA OF DATABASE│   │ SELECT CACHE AREA OF DATABASE│
  │          SERVER           │   │            SERVER            │
  └──────────────────────────┘   └──────────────────────────────┘
                      │                           │
                      ▼◄──────────────────────────┘
  ┌──────────────────────────┐
  │   TRANSMIT LOG ACQUISITION │─── S106
  │  REQUEST TO DATABASE SERVER│
  └──────────────────────────┘
                      │
                      ▼◄───────────────────┐
              ╱─────────────╲  S107         │
             ╱   IS DATA IN  ╲    NO        │
            ╱ LOG AREA OR IN CACHE AREA╲────┘
             ╲   RECEIVED?   ╱
              ╲─────────────╱
                      │ YES
                      ▼
  ┌──────────────────────────┐
  │ TRANSMIT DATA ACQUIRED FROM│─── S108
  │  LOG AREA OR CACHE AREA TO │
  │     TERMINAL APPARATUS     │
  └──────────────────────────┘
                      │
                      ▼
                    END
```

# FIG. 12

START

DESCRIBE ACCEPTANCE TIME, DBID, AND USER ID IN HISTORY MANAGEMENT INFORMATION — S201

IS THERE HISTORY OF SPECIFIED USER AND ID? — S202

NO

YES

CALCULATE TIME INTERVAL BETWEEN LOG ACQUISITION REQUESTS — S203

END

# FIG. 13

```
                        ┌─────────┐
                        │  START  │
                        └────┬────┘
                             │
                             ▼              ╱ S301
               ╱─────────────────────────╲
      YES     ╱        IS LOG              ╲
    ◄────────╱  ACQUISITION REQUEST         ╲
             ╲  FOR DATA IN LOG AREA        ╱
              ╲        RECEIVED?           ╱
               ╲─────────────┬───────────╱
                           NO│
                             ▼              ╱ S302
               ╱─────────────────────────╲
              ╱          IS LOG            ╲      NO
              ╲  ACQUISITION REQUEST FOR    ╲────────────┐
              ╲   DATA IN LOG CACHE AREA    ╱            │
               ╲        RECEIVED?          ╱             │
                ╲───────────┬────────────╱              │
                          YES│                          │
                             ▼              ╱ S303       │
               ╱─────────────────────────╲              │
              ╱                            ╲    YES      │
              ╲   IS THERE REQUESTED        ╲───────┐    │
              ╲     CACHED LOG DATA?        ╱       │    │
               ╲────────────┬─────────────╱        │    │
                          NO │                      │    │
  ┌──────────────────────────┘                      │    │
  │                          ▼     ╱ S304            ▼    ▼      ╱ S307
  │           ┌──────────────────────────┐  ┌──────────────────────────┐
  │           │ ACQUIRE LOG DATA IN LOG  │  │  ACQUIRE LOG CACHE DATA   │
  │           │          AREA            │  └────────────┬─────────────┘
  │           └────────────┬─────────────┘               │   ╱ S308
  │                        │   ╱ S305                     ▼
  │           ┌──────────────────────────┐  ┌──────────────────────────┐
  │           │ STORE LOG DATA AS CACHED  │  │  TRANSMIT SPECIFIED PAGE  │
  │           │          LOG DATA         │  └────────────┬─────────────┘
  │           └────────────┬─────────────┘               │
  │                        │   ╱ S306                     │
  │           ┌──────────────────────────┐               │
  │           │  TRANSMIT SPECIFIED PAGE  │               │
  │           └────────────┬─────────────┘               │
  │                        │                              │
  │                        ▼◄─────────────────────────────┘
  │                   ┌─────────┐
  │                   │   END   │
  │                   └─────────┘
```

# FIG. 14

DATABASE SERVER — 5

SECOND COMMUNICATION UNIT — 21

DATA STORAGE UNIT — 22

DB AREA — 22a

LOG AREA — 22b

CACHE AREA — 22c

MANAGEMENT AREA — 22d

CONTROL UNIT — 23

MANAGEMENT UNIT — 24

# FIG. 15

| USER ID | TOP-POSITION LOG ID |
|---------|---------------------|
| 100 | 999 |
| 105 | 851 |
| 102 | 758 |
| 108 | 500 |

# FIG. 16

```
              ( START )
                  │
                  ▼
            ╱ S401 ╲
  ┌──────╱   IS LOG    ╲
  │YES  ╱ ACQUISITION REQUEST ╲
  │◄───╱ FOR DATA IN LOG AREA   ╲
  │    ╲    RECEIVED?          ╱
  │      ╲                   ╱
  │          │ NO
  │          ▼
  │        ╱ S402 ╲
  │      ╱   IS LOG    ╲         NO
  │     ╱ ACQUISITION REQUEST FOR ╲──────────────────────┐
  │     ╲ DATA IN LOG CACHE AREA  ╱                        │
  │      ╲   RECEIVED?          ╱                          │
  │          │ YES                                         │
  │          ▼                                             │
  │        ╱ S403 ╲                                        │
  │      ╱   DOES      ╲          YES                      │
  │     ╱ CORRESPONDENCE ╲────────────┐                    │
  │    ╱ INFORMATION INCLUDE USER ╲    │                    │
  │    ╲  WHO IS REQUESTER    ╱      │                    │
  │      ╲                  ╱        │                    │
  │          │ NO                    │                    │
  └──────────┤                       ▼                    │
             ▼  S404             S409                     │
  ┌─────────────────────────┐  ┌──────────────────────┐   │
  │ ACQUIRE LOG DATA IN LOG │  │ ACQUIRE TOP-POSITION │   │
  │          AREA            │  │ LOG ID OF USER WHO IS│   │
  └─────────────────────────┘  │ REQUESTER FROM       │   │
             ▼  S405            │ CORRESPONDENCE INFO  │   │
  ┌─────────────────────────┐  └──────────────────────┘   │
  │ STORE LOG DATA AS CACHED │           ▼  S410           │
  │        LOG DATA          │  ┌──────────────────────┐   │
  └─────────────────────────┘  │ ACQUIRE SPECIFIED    │   │
             ▼  S406            │ PAGES STARTING AT    │   │
  ┌─────────────────────────┐  │ ACQUIRED TOP-POSITION│   │
  │ UPDATE TOP-POSITION LOG  │  │ LOG ID IN CACHED LOG │   │
  │ ID OF USER WHO IS        │  │        DATA          │   │
  │ REQUESTER DESCRIBED IN   │  └──────────────────────┘   │
  │ CORRESPONDENCE INFORMATION│          ▼  S411           │
  └─────────────────────────┘  ┌──────────────────────┐   │
             ▼  S407            │ TRANSMIT SPECIFIED   │   │
  ┌─────────────────────────┐  │      PAGES           │   │
  │ DELETE RECORDS INCLUDING │  └──────────────────────┘   │
  │ TOP-POSITION LOG ID THAT │           │                 │
  │ ARE NOT INCLUDED IN      │           │                 │
  │ UPDATED CACHED LOG DATA  │           │                 │
  │ FROM CORRESPONDENCE INFO │           │                 │
  └─────────────────────────┘           │                 │
             ▼  S408                     │                 │
  ┌─────────────────────────┐           │                 │
  │ TRANSMIT SPECIFIED PAGES │           │                 │
  └─────────────────────────┘           │                 │
             │◄────────────────────────┴─────────────────┘
             ▼
          ( END )
```

## FIG. 17A

| LOG | CONTENT OF LOG |
|---|---|
| 1001 | hhhhhhhh |
| 1000 | gggggggg |
| 999 | ffffffffffffff |
| 998 | eeeeeeee |
| 997 | cccccccc |
| 996 | bbbbbbbb |
| … | … |
| 501 | yyyyyyyyy |

## FIG. 17B

| LOG | CONTENT OF LOG |
|---|---|
| 1000 | ffffffffffff |
| 999 | eeeeee |
| 998 | dddddd |
| 997 | cccccc |
| 996 | bbbbbb |
| 995 | aaaaaa |
| … | … |
| 501 | zzzzzzzz |

## FIG. 17C

| USER ID | TOP-POSITION LOG ID |
|---|---|
| 100 | 999 |
| 105 | 851 |
| 102 | 758 |
| 108 | 500 |

## FIG. 18A

| LOG | CONTENT OF LOG |
|------|-----------------|
| 1001 | hhhhhhhh |
| 1000 | gggggggg |
| 999 | ffffffffffffff |
| 998 | eeeeeeee |
| 997 | cccccccc |
| 996 | bbbbbbbb |
| … | … |
| 501 | yyyyyyyyy |

## FIG. 18B

| LOG | CONTENT OF LOG |
|------|-----------------|
| 1001 | hhhhhhhh |
| 1000 | gggggggg |
| 9999 | ffffffffffffff |
| 9989 | eeeeeeee |
| 9979 | cccccccc |
| 9969 | bbbbbbbb |
| … | … |
| 501 | yyyyyyyyy |

## FIG. 18C

| USER ID | TOP-POSITION LOG ID |
|---------|---------------------|
| 100 | 1001 |
| 105 | 851 |
| 102 | 758 |

# FIG. 19

118
PORTABLE
STORAGE
MEDIUM

111
PROCESSOR

113
ROM

115
MEDIUM
CONNECTION
UNIT

100

112
RAM

114
AUXILIARY
STORAGE
APPARATUS

116
COMMUNICATION
INTERFACE

# FIG. 20

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2009 253564 A (FUJI XEROX CO LTD) 29 October 2009 (2009-10-29) * abstract * * paragraphs [0007] - [0018], [0020], [0022], [0023], [0026] - [0038] * * figures 1, 3, 5 * | 1-13 | INV. G06F11/34 G06F11/07 G06F17/40 |
| A | US 2012/096465 A1 (KAMISHIRO DAISUKE [JP]) 19 April 2012 (2012-04-19) * abstract * * paragraphs [0009], [0041] - [0064], [0070], [0076] - [0096] * * figures 3-6, 14 * | 1-13 | |
| A | US 2015/370482 A1 (MITO DAISUKE [JP] ET AL) 24 December 2015 (2015-12-24) * paragraphs [0027] - [0030], [0039] - [0059], [0073] - [0094] * * figures 1, 2, 4, 6, 7 * | 1-13 | |

TECHNICAL FIELDS
SEARCHED      (IPC)

G06F

The present search report has been drawn up for all claims

| Place of search | Date of completion of the search | Examiner |
|---|---|---|
| Munich | 12 September 2018 | Johansson, Ulf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 3 401 791 A1

## ANNEX TO THE EUROPEAN SEARCH REPORT
## ON EUROPEAN PATENT APPLICATION NO.

EP 18 17 1457

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2018

| Patent document cited in search report | | Publication date | Patent family member(s) | | Publication date |
|---|---|---|---|---|---|
| JP 2009253564 | A | 29-10-2009 | NONE | | |
| US 2012096465 | A1 | 19-04-2012 | JP 2012088849 A<br>US 2012096465 A1 | | 10-05-2012<br>19-04-2012 |
| US 2015370482 | A1 | 24-12-2015 | CN 105279458 A<br>JP 2016009220 A<br>US 2015370482 A1 | | 27-01-2016<br>18-01-2016<br>24-12-2015 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004280423 A
- JP 2008077611 A
- JP 2010140111 A